(19) Europäisches Patentamt
European Patent Office
Office européen des brevets

(11) **EP 3 422 088 A1**

(12) **EUROPÄISCHE PATENTANMELDUNG**

(43) Veröffentlichungstag:
**02.01.2019 Patentblatt 2019/01**

(51) Int Cl.:
***G02F 1/01*** *(2006.01)*　***G02F 1/11*** *(2006.01)*
***G02B 21/00*** *(2006.01)*　***G02B 26/06*** *(2006.01)*

(21) Anmeldenummer: **17202895.3**

(22) Anmeldetag: **29.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2010 DE 102010047352**
**08.03.2011 DE 102011013613**

(62) Dokumentnummer(n) der früheren Anmeldung(en) nach Art. 76 EPÜ:
**11007920.9 / 2 437 096**

(71) Anmelder: **Carl Zeiss Microscopy GmbH**
**07745 Jena (DE)**

(72) Erfinder:
• **ANHUT, Tiemo**
**07749 Jena (DE)**

• **KALKBRENNER, Thomas**
**07745 Jena (DE)**
• **SCHWEDT, Daniel**
**99423 Weimar (DE)**

(74) Vertreter: **Loritz, Rainer**
**Carl Zeiss AG**
**Konzernfunktion Recht und Patente**
**Patentabteilung Jena**
**Carl-Zeiss-Promenade 10**
**07745 Jena (DE)**

Bemerkungen:
•Diese Anmeldung ist am 17-01-2017 als Teilanmeldung zu der unter INID-Code 62 erwähnten Anmeldung eingereicht worden.
•Die Patentansprüche wurden nach dem Anmeldetag eingereicht (R. 68(4) EPÜ).

(54) **MIKROSKOP UND MIKROSKOPIERVERFAHREN**

(57) Mikroskop mit mindestens einem Beleuchtungsstrahl, der in einem Teilbereich entlang seines Querschnitts mit einer Modulationsfrequenz phasenmoduliert wird und einem Mikroskopobjektiv zur Fokussierung des Beleuchtungsstrahls in eine Probe sowie einem Detektionsstrahlengang und mindestens einem Mittel zur Demodulation,
wobei mindestens ein polarisationsänderndes Element im Beleuchtungsstrahlengang vorgesehen ist, dem eine Phasenplatte nachgeordnet ist, die mindestens zwei Bereiche mit unterschiedlicher Phasenbeeinflussung aufweist.

Eine zweite Ausführung betrifft ein Mikroskop mit mindestens einem Beleuchtungsstrahl, und einem Mikroskopobjektiv zur Fokussierung des Beleuchtungsstrahls in eine Probe sowie einem Detektionsstrahlengang mit mindestens einem Demodulator,
wobei der Beleuchtungsstrahl abwechselnd auf mindestens zwei Strahlengänge aufgeteilt wird
und in einem der Strahlengänge ein Element zur Erzeugung eines zum ersten Strahlengang unterschiedlichen Feldmodes vorgesehen ist und die beiden Strahlengänge mit unterschiedlichen Feldmoden im Fokus überlagert sind.

**EP 3 422 088 A1**

**Beschreibung**

Stand der Technik

Referenzen

[1] Chen et al., Opt. Express 16, 18764 (2008)
[2] Wong et al., Appl. Opt. 48, 3237 (2009)
[3] TOF Kamera mit Lock-In pixeln: http://www.mesa-imaging.ch/
[4] Gated-Intensifier-Kamera: z.B. tautec pico star: http://www.tautec.com/4709/4736.html
[5] Sueda et al., Opt. Express 12, 3548 (2004)
[6] WO2009/008838
[7] EP500717 B2 Zweiphotonenmikroskopie
[8] A. Leray and J. Mertz, Opt. Express 14, 10565 (2006)

In verschiedenen Bereichen der Optik wird eine schnelle Umschaltung zwischen verschiedenen räumlichen Lichtverteilungen benötigt. Zum Beispiel kann man eine solche Möglichkeit in der Laserrastermikroskopie nutzen, um sehr schnell zwischen verschiedenen Fokusfeldern schalten zu können. Dies ist insbesondere dann wichtig, wenn man nur das Licht im Fokus eines Objektivs beeinflussen möchte. Hier wurde kürzlich eine Methode demonstriert, mit welcher eine dreidimensionale Abbildung von optisch dicken Proben möglich wird, wobei das Hintergrundlicht diskriminiert wird [1,2,6].
Die Grundlage ist hierbei, dass eine Eigenschaft nur die Fluoreszenz, welche im Fokus generiert wird, zeitlich beeinflusst, wobei die Strahlung außerhalb des Fokus nicht moduliert werden soll. Bislang beruht diese Methode auf dem schnellen Schalten der optischen Phase in der Pupille eines Objektivs. Gezeigt wurde bislang, dass man die Phase in zwei Halbpupillen schaltet.

Lösung

Ähnlich der oben geschilderten Halbpupillenschaltung kann vorteilhaft auch die Schaltung zwischen den optischen Phasen anderer Teilstrahlen genutzt werden. Zudem ist es vorteilhaft möglich, nicht nur die Phasen, sondern generell die Feldmodenschaltung zu nutzen, um eine zeitliche Modulation der Emission aus dem Fokalvolumen zu generieren, wobei die Strahlung außerhalb des Fokalvolumens zeitlich nicht moduliert wird. Es sollen hier auch schnelle Modenschalter für diesen Zweck diskutiert werden.
Neben der Phasenschaltung wird zudem die Schaltung der Polarisation als weitere Möglichkeit vorgeschlagen, um schnell zwischen zwei verschiedenen Feldmoden des Anregungsspots zu wechseln, wodurch die aus dem Fokalvolumen kommende Strahlung moduliert wird. Es ist erkannt worden, dass man hierbei einen ähnlichen Effekt erzielen kann, wie mit dem Schalten der Phase. Die Auswirkungen des Schaltens beeinflussen insbesondere die Anregung von Fluoreszenz im Fokus.

Die infrage kommenden Lösungen sollen zu einer Modulation im Bereich mehrerer MHz führen. Damit sind sie grundsätzlich für einen vorteilhaften Einsatz in Laser-Scanning Mikroskopen (LSM) zur Erhöhung der Eindringtiefe ohne Einbußen in der Scangeschwindigkeit geeignet. Eine weitere Erhöhung der Geschwindigkeit ergibt sich durch eine Parallelisierung mittels Multispotmikroskopie. Allerdings ist eine langsamere Modulation immer auch möglich und kann entsprechend eingestellt werden.

Wegen der vorteilhaften hohen Modulationsfrequenzen kommen im Wesentlichen schnell schaltende optoelektronische Elemente wie zum Beispiel AOMs und EOMs infrage. Mit den Lösungen soll eine Eigenschaft geschaltet werden, die sich am Ende im Wesentlichen auf das Feld im Fokus auswirkt und in dessen Resultat das Fokusfeld moduliert wird, während die wesentlichen außerfokalen Anteile nicht signifikant moduliert werden.
Die Erfindung wird durch die Merkmale der unabhängigen Patentansprüche charakterisiert.
Bevorzugte Weiterbildungen sind Gegenstand der abhängigen Ansprüche.

Es folgt nun eine schematische Beschreibung verschiedener vorteilhafter Ausführungen zur Erfindung:

Ausführung 1

In einer ersten Ausführung wird davon ausgegangen, dass die Phasen an einem passiven Element erzeugt werden, welches einen polarisationsabhängigen Phasenhub in verschiedenen räumlichen Bereichen, vorzugsweise in einer Objektivpupille, einführt. Um eine schnelle zeitliche Modulation zu erzeugen, wird die Polarisation z.B. mittels eines EOM oder eines weiteren geeigneten Elementes wie z.B. nematischer Kristalle, welcher aber langsamer reagieren, oder Aufbauten, die über eine Wegaufteilung eine unterschiedliche Polarisation erzeugen und dieser Weg z.B. über einen AOM/AOTF schnell wechselt, zeitlich manipuliert.

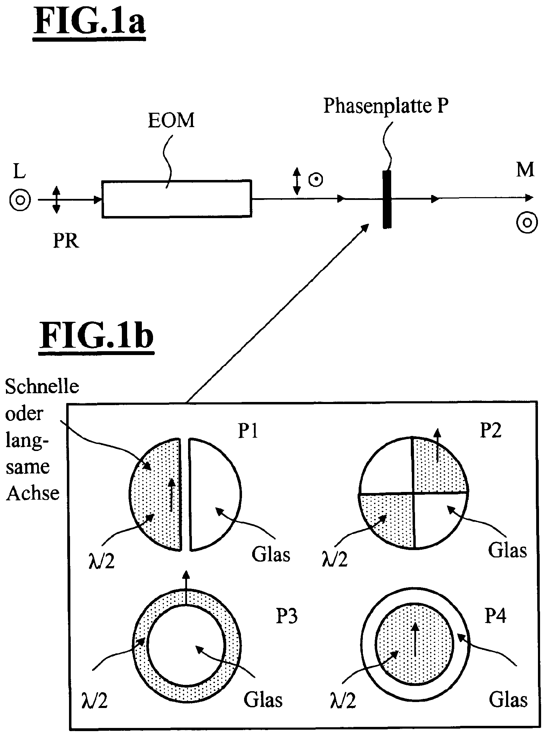

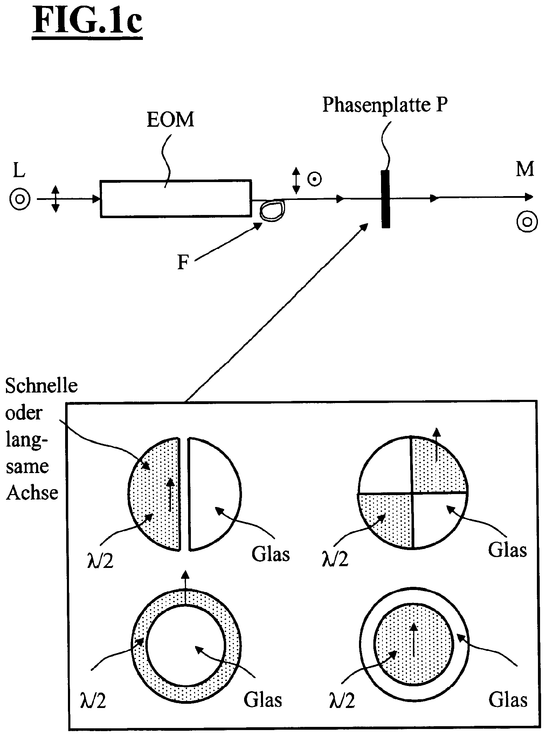

Durch das Umschalten bzw. Drehen der Polarisation in Fig.1 wird jeweils ein Teil des die Phasenplatten durchsetzenden Strahls in seiner optischen Phase beeinflusst, während die Anteile des Strahls, die durch den polarisationsunabhängigen Anteil der Platte gehen, keinen Phasenhub erfahren. Damit ist es möglich, durch eine Schaltung des Polarisationszustandes eine Umschaltung der Phasen zu erzielen. Die in Fig.1 gezeigten Phasenplatten sind nur beispielhaft. Prinzipiell sind hier verschiedene Geometrien denkbar. Durch die Modulation beispielsweise eines EOM kann der Polarisationszustand beispielsweise entweder sinusoidal oder mit einem Rechteckprofil oder einer anderen vorteilhaften Wellenform variiert werden. Hierdurch wird der Übergang im Fokus des Mikroskopes zeitlich verschieden beeinflusst.

Fig.1a zeigt einen derartigen schnellen optischen Modenschalter, basierend auf einem im Beleuchtungsstrahlengang angeordneten elektrooptischen Modulator EOM und passiven Phasenelementen P.

Die beispielhaft gezeigten passiven Phasenelemente bestehen hier jeweils aus einer Kombination eines doppelbrechenden Kristalls, dargestellt ist eine Phasenplatte P in Form einer geteilten λ/2-Platte, und einer bezüglich der Phase polarisationsrichtungsunabhängigen Komponente beispielweise als Glas ausgebildet. Dabei ist die Phasenplatte so ausgerichtet, dass die schnelle Richtung des Kristalls vorteilhaft parallel bzw. senkrecht oder in einem weiteren optimierten Winkel zur eingestrahlten Laserpolarisation ausgerichtet wird.

In Fig. 1b sind verschiedene Modifikationen der Phasenplatte P dargestellt, eine halbseitige Teilung in eine λ/2 Hälfte und eine Glashälfte in P1, eine Viertelteilung in gegenüberliegende λ/2 Viertel und Glasviertel in P2, einen aussenliegenden λ/2 Ring und einen inneren Glaskern in P3 und umgekehrt einen aussenliegenden Glasring und einen innenliegenden λ/2 Kern in P4.

Glas ist hier nur beispielhaft aufgeführt. Auch amorphes Quarz [Suprasil] oder andere nicht doppelbrechende Materialien können zum Einsatz kommen.

Jeweils als Pfeil dargestellt ist die Orientierung der außerordentlichen Achse des jeweiligen λ/2 Teils. Durchtritt ein parallel zu dieser Pfeilrichtung polarisierter Lichtstrahl dieses Element, wird im λ/2 Teil eine Phasenverschiebung um eine halbe Wellenlänge relativ zum Glasteil erzeugt. Ist dessen Polarisation hingegen senkrecht zur Pfeilrichtung orientiert, wird keine Phasenverzögerung erzeugt.

Das Element P ist in Wirkverbindung mit dem EOM, der durch entsprechende Ansteuerung eine schnelle Drehung der Polarisationsrichtung PR des einfallenden Lichtstrahls L, meist eines linear polarisierten Laserstrahls, bewirkt.

Nach Durchgang durch P verläuft der Lichtstrahl, wie auch in den im weiteren dargestellten Anordnungen, in Richtung des Mikroskops M, über eine nicht dargestellte Scaneinheit zur Probe weiter, wie es auch aus dem Stand der Technik bekannt ist. Durch die halbseitige Phasenänderung durch die Platte P erfährt der Lichtstrahl die FMM-typische Feldmodulation.

Zur Erfindung gehörig ist auch ein Regelverfahren, wobei vorteilhaft die Ausbildung des Phasenelementes, beispielsweise durch Auswechslung oder Ansteuerung eines SLM geändert wird und über eine Messung des Modulationskontrasts, beispielsweise über Messungen mit eingeschalteter Platte P und ausgeschwenkter Platte P (ohne FMM) eine Optimierung des FMM Signals erfolgen kann.

Im Rahmen der Erfindung kann auch eine Rotation der Platte P bei feststehendem Lichtstrahl L anstelle der Drehung der Polarisation durch den EOM erfolgen.

Fig. 1c) zeigt wie in Fig. 1a den schnellen optischen Modenschalter, basierend auf einem EOM und passiven Phasenelementen.

In Abb. 1c) wird der erfinderische Ansatz noch dahingehend erweitert, dass jetzt die Modulation der Polarisationsrichtung des Lasers vor der Einkopplung in eine Faser F erfolgen kann, wenn diese Faser wie bei polarisationserhaltenden Fasern bekannt, den Polarisationszustand des Lichtes erhält. Das Phasenelement befindet sich dann nach der Faser wieder in einer Pupille des optischen Systems.

Diese Ausführung ist insbesondere vorteilhaft, wenn im eigentlichen optischen System/Gerät/Mikroskop/Scankopf wenig Bauraum zur Verfügung steht.

Im Gegensatz zum Stand der Technik (z.B. Chen et al. [1]) kann hier durch die Verwendung der passiven Phasenelemente in Wirkverbindung mit der Faser eine elektro-magnetische Isolation des verwendeten EOM erfolgen, was vorteilhaft eine Beeinflussung der Meßanordnung durch die hochfrequent ausgestrahlten elektrischen Felder des EOM vermeidet. Der EOM kann auch vorteilhaft in einem Lasermodul separat untergebracht werden.

Wiederum sind in 1d) 4 mögliche Phasenplatten P1-P4 beispielhaft gezeigt.

Ausführung 2a

In einer weiteren vorteilhaften Ausführung wird erfindungsgemäß eine Lösung realisiert, in der die beiden Moden bereits vorliegen und mittels eines EOM, AOM oder AOTF zwischen diesen Moden geschaltet wird. Dieses Prinzip unterscheidet sich noch weitergehend von dem bislang dokumentierten Stand der Technik, da jetzt das Schalten im Fokus nicht über ein Schalten der optischen Phasen erfolgt, sondern zwischen zwei optischen Feldmoden. Hierbei wird ein äquivalenter Anfangs- und Endzustand hergestellt, wobei jedoch der Übergang von einer Konfiguration in die andere Konfiguration, gekennzeichnet durch die jeweilige Fokusfeldstruktur, inkohärent erfolgt.

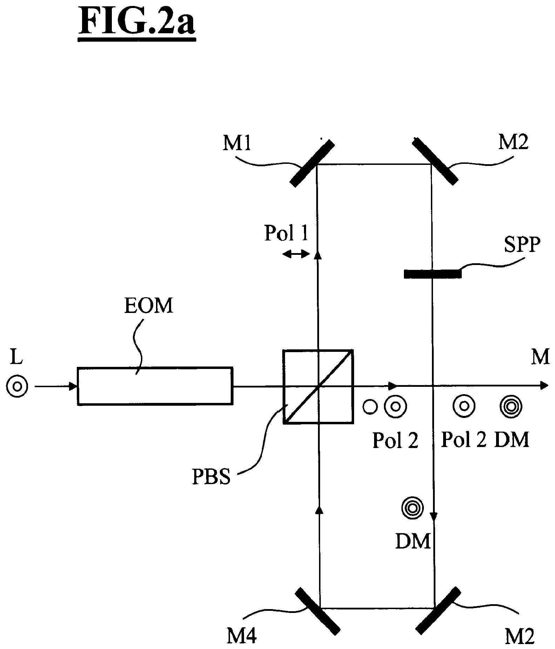

Abbildung 2a) zeigt einen schnellen optischen Modenschalter, basierend auf einem EOM, dem ein polarisierender Strahlteiler PBS im Lichtweg nachgeordnet ist.

Zur Lichtumlenkung sind nach dem PBS Spiegel M1- M4 vorgesehen.

Über M1-M4 wird eine von PBS erzeugte (reflektierte) Polarisationsrichtung Pol1 umgelenkt.

Zwischen M2 und M3 befindet sich ein Phasenelement, das für eine bestimmte Polarisationsrichtung einen Donut-Mode DM der Strahlverteilung erzeugt (SPP-Spiral phase plate, [5]), der an PBS nach M4 wieder mit dem durch PBS hindurchgehenden Anteil vereinigt wird.

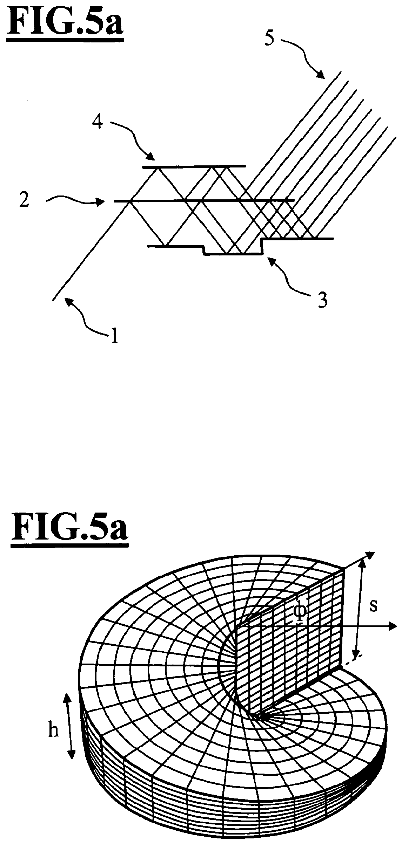

Abbildung 5b) zeigt ein Beispiel für eine Spiralphasenplatte aus:

New J. Phys. 6 (2004) 71
doi:10.1088/1367-2630/6/1/071
PII: S1367-2630(04)80050-8

"Observation of the vortex structure of a non-integer vortex beam" Jonathan Leach, Eric Yao and Miles J Padgett

Der linear polarisierte Laserstrahl L wird durch den wellenretardierenden EOM propagiert, der wie ein schnell schaltbarer Polarisationsdreher wirkt. Hierdurch wird das Licht auf seinem weiteren Weg entweder durch den folgenden polarisierenden Strahlteiler (PBS) transmittiert (z.B. das zur Blattebene parallel polarisierte Licht). Für die andere Polarisationsrichtung wird das Licht in der Zeichnung nach oben gelenkt und durchtritt ein Element wie eine Spiralphasenplatte SPP, die aus dem Gaußmode eine Donutmode erzeugt (z.B. [5])].

Alternativ können hier auch andere modenschaltende Elemente wie Subwellenlängenstrukturen oder DOEs (Diffractive Optical Elements) in diesen Strahl eingebracht werden. Das Licht wird hiernach wiederum am PBS reflektiert und ist mit dem Strahl der zweiten Polarisation gut zeitlich alternativ überlagert. Durch eine Modulation des EOM kommt es in der Folge zu einer Modulation der verschiedenen Feldmoden (pol1 2 bzw. GM)und damit zu einer Modulation des Lichtes im Fokus des Mikroskopobjektives.

Für die zeitabhängige Intensität des Lichtes, welches aus dem Fokalvolumen emittiert wird, gilt

$$I(t) \propto \int C(r) I_P(r,t) dr .$$

Hier bezeichnet C(r) die räumlich variierende Konzentration anregbarer Moleküle. Das Integral erstreckt sich über einen Bereich, der das Fokalvolumen enthält. $I_P(r,t)$ bezeichnet die zeitlich variierende Anregungsintensität, die für den Fall des Umschaltens zwischen zwei Moden durch

$$I_P(r) \propto G(r)(1 + Cos(\omega t)) + LG(r)(1 + Sin(\omega t))$$

gegeben ist. Wichtig ist hierbei, dass im Wesentlichen nur das Licht im Fokus diese zeitliche Modulation erfährt, aber alles Licht außerhalb des Fokus nicht wesentlich oder aber wesentlich schwächer moduliert wird.

Mittels einer Lock-in-Detektion lässt sich dann der zeitlich variierende Anteil vom zeitlich konstanten Anteil separieren. Dieser zeitlich variierende Anteil entspricht der Differenz der beiden verschiedenen Fokusfelder, wobei der nichtmodulierte außerfokale Anteil zeitlich konstant ist und durch die phasenrichtige Detektion über z.B. eine Lock-in-Detektion entfällt.

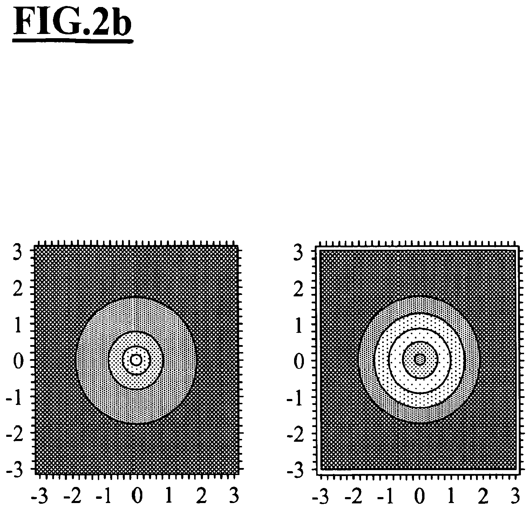

Abbildung 2b) zeigt die Intensitätsverteilung einer Gaußmode und einer Donutmode (Laguerre-Gauss-Mode). Die Achsen bezeichnen eine skalierte laterale räumliche Ausdehnung in der Fokalebene.

Die vorgeschlagene Lösung unterscheidet sich vom Stand der Technik insbesondere dadurch, dass hier das Lichtfeld nicht in der Pupille in seine Einzelteile zerlegt und über einen Phasenmodulator in verschiedenen räumlichen Teilen beeinflusst wird, sondern dass eine zeitlich variierende Umschaltung zwischen zwei verschiedenen Fokusfeldern erfolgt. Dadurch ergibt sich eine Reihe von Vorteilen für die praktische Umsetzung. Der signifikanteste Vorteil besteht zunächst in der erreichbaren Modulationsgeschwindigkeit.

Ein weiterer Vorteil der Lösung ist ihre einfache Erweiterbarkeit auf mehrere Fokalvolumina. Hierbei würde man beispielsweise mehrere Gaußsche Strahlen in die Anordnung einstrahlen und diese auf dem entsprechenden optischen Weg mittels eines Array-Transformators (z.B. eines Spiralphasenmaskenarrays) umformen.

Die Erzeugung mehrerer Fokalvolumina an sich ist beispielsweise in DE19904592, beschrieben worden (siehe auch

Abb. 5a).

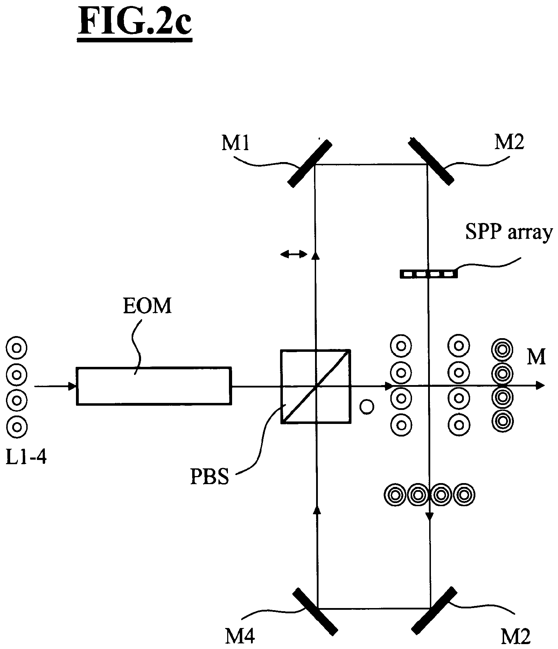

Eine schematische Ausführung wird in Abb. 2c gezeigt:

Dargestellt ist hier eine Multispotvariante zur Modenmodulation mit dem Beispiel von 4 vorzugsweise kollimierten Strahlen L1-4, die schließlich in das Mikroskop M in Richtung der Fokusebene fokussiert werden.

Der Durchlauf von L1-4 erfolgt analog Fig.2a durch die dort dargestellte Anordnung, wobei statt einer einzelnen Spiralphasenmaske hier ein SPP Array, schematisch durch vier SPP dargestellt, vorgesehen ist.

Für den Durchgang der Strahlen L1-4 durch den EOM kann dieser einen entsprechend großen Querschnitt aufweisen bzw. der Multispoterzeugung in Lichtrichtung auch vorgeordnet sein oder es können mehrere EOM für L1-4 , auch mit unterschiedlichen Modulationsfrequenzen, oder ein segmentierter EOM mit unterschiedlich angesteuerten Querschnittsbereichen , vorgesehen sein.

In Abb. 2c sind nur vier Strahlen dargestellt, wobei die Erfindung letztendlich auch vorteilhaft dafür ausgebildet sein kann, eine wesentlich größere Anzahl von Strahlen zu modulieren und somit eine quasi-konfokale Multifokusmikroskopie zu ermöglichen. Während für 4 Foki im descannten Modus noch individuelle Detektoren/Lock-In-Module verwendet werden können, eignet sich zur Detektion in letzterem Fall vorzugsweise ein Detektorarray im descannten Fall oder eine Kamera mit einem modulierbaren Verstärker (Multichannelplate) [4] oder auch smart-pixel CMOS-Kameras [3], die eine pixelweise Demodulation in der Kamera erlauben, im nondescannten oder direkten Detektionsmodus.

Ausführung 2b

Das Umschalten zwischen zwei Moden kann zum Beispiel auch sehr schnell mittels eines akusto-optischen Modulators (AOM) erfolgen.

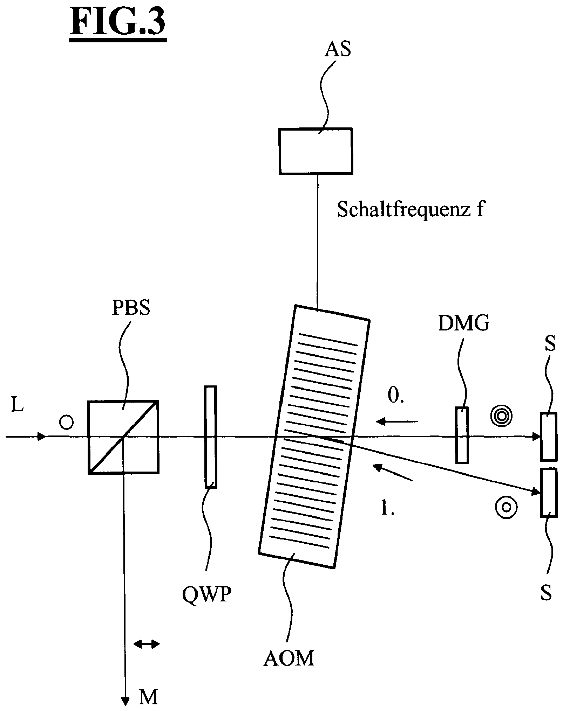

Fig. 3 zeigt das schnelle Umschalten zwischen zwei Feldmoden (z.B. Laguerre-Gauß und Gaußmode) mittels eines AOM, also Transformierung eines Gaußschen Feldes in eine zeitabhängige Überlagerung einer Gaußschen und Gauß-Laguerre-Mode.

Es ist wiederum ein PBS vorgesehen.

Im durchgehenden Strahlengang nach dem PBS ist nach einer Viertelwellenplatte QWP, die der Polarisationsdrehung dient um den rückkehrenden Strahl durch den PBS in Richtung des weiteren Mikroskops M lenken zu können, ein AOM angeordnet, in dessen O. und erster Ordnung sich Reflektionselemente S befinden die das Licht in gleicher Richtung in den AOM zurückreflektieren.

In der 0. Ordnung ist im Strahlengang zwischen AOM und S ein -"Donut mode generator" DMG, (z.B. Spiral phase plate oder "radialer Polarisator") vorgesehen,

Diese Ausführung der Erfindung stellt eine vorteilhafte Variation der o.g. Ausführung 2a dar.

Hierbei wird ein Gausscher Strahl mit einer linearen Polarisation durch einen polarisierenden Strahlteiler und eine die Polarisation beeinflussende Viertelwellenplatte, in einen von einer Ansteuereinheit AS angesteuerten AOM oder AOTF (für sehr schnelle Schaltung ein AOM; bei langsamerer, aber polychromatischer Modulation kann auch ein AOTF eingesetzt werden) eingestrahlt.

Im AOM kann sich nun durch Einstrahlung eines akustischen Feldes ein zeitlich variierendes Gitter ausbilden, an welchem dieser Strahl zum Beispiel jeweils in seine 0. und seine 1. Ordnung abgelenkt wird. Zwischen diesen Ordnungen wird also schnell (hochfrequent) hin- und hergeschaltet. Der Stahl durchtritt dann wiederum auf einem der Wege ein modenerzeugendes Element wie z.B. ein donut mode erzeugendes Element DMG, wobei neben Donut-Moden auch andere modenerzeugende Elemente, z.B. zur Erzeugung höhere Gauss-Laguerre-Moden, denkbar sind, und wird nachfolgend an einem ersten Spiegel reflektiert. Danach wird das Element ein zweites Mal durchtreten. Die andere Ordnung wird hingegen nur an einem Spiegel reflektiert. Beide Ordnungen durchtreten dann wiederum den AOM und werden dabei wieder im AOM in eine Strahlrichtung gebracht, wobei sie in der Regel, jedoch im Einzelfall abhängig vom modenerzeugenden Element, wieder in der linearen Ausgangpolarisation den AOM verlassen. Durch Drehung dieses Feldes mittels einer Viertelwellenplatte QWP wird der Strahl dann zur Reflektion am polarisierenden Strahlteilerwürfel PBS gebracht und kann somit in Richtung des Mikroskops M und der Probe gelangen.

Die Detektion der emittierten Fluoreszenzstrahlung erfolgt mit entsprechenden optoelektronischen Detektoren und einer optischen oder elektronischen Demodulation.

Erläuterung der verwendeten Detektionstechniken:

LOCK-IN-Technik

Lock-in-Techniken (LIT) basieren auf der phasenabhängigen Messung zeitlich modulierter Signale, wobei die Grundlage eine Frequenzreferenz bildet. Typischerweise wird die Probe mit einer bestimmten Frequenz angeregt, während der LI das Signal bei der Referenzfrequenz misst.

Das Lock In - System LI detektiert das Signal bei dieser bestimmten Referenzfrequenz in Abhängigkeit von der Referenzphasenlage.

In fester Beziehung zur Referenzphase erzeugen LI-Verstärker ihre eigene interne Messphase (in der Regel durch einen sog. Phase-locked-loop)

$$LI_{ref} = V_L \sin(\omega_L t + \theta_{ref})$$

In einem klassischen LI-Verstärker wird zunächst das Signal verstärkt und nachfolgend mit der LI-Referenz $LI_{ref}$ mittels eines phasensensitiven Detektors (PSD) oder eines Multiplikators multipliziert.
Wird zum Beispiel das Signal beschrieben durch

$$S(t) = V_S \sin(\omega_S t + \theta_S),$$

so erhält man am Ausgang des PSD

$$V_{PSD} = V_S V_L \sin(\omega_r t + \theta_S) \sin(\omega_L t + \theta_{ref})$$
$$= 1/2 V_S V_L (\cos([\omega_r - \omega_L]t + \theta_S - \theta_{ref}) - \cos([\omega_r + \omega_L]t + \theta_S + \theta_{ref})$$

Somit liefert der Ausgang des PSD zwei zeitlich variierende Signale: eines bei der Differenz- und eines bei der Summenfrequenz von LI-Referenzphase und Signalphase. Dieses Signal $VI_{PSD}$ wird tiefpaßgefiltert, wodurch alle hochfrequenten Signale entfallen. Bei einem perfekten Tiefpass ergibt sich schließlich nur dann ein Signal, wenn ($\omega_r$ - $\omega_L$) = 0 gilt. Damit erhält man am Ausgang

$$V_{PSD,TP} = 1/2 V_S V_L \cos(\theta_S - \theta_{ref}).$$

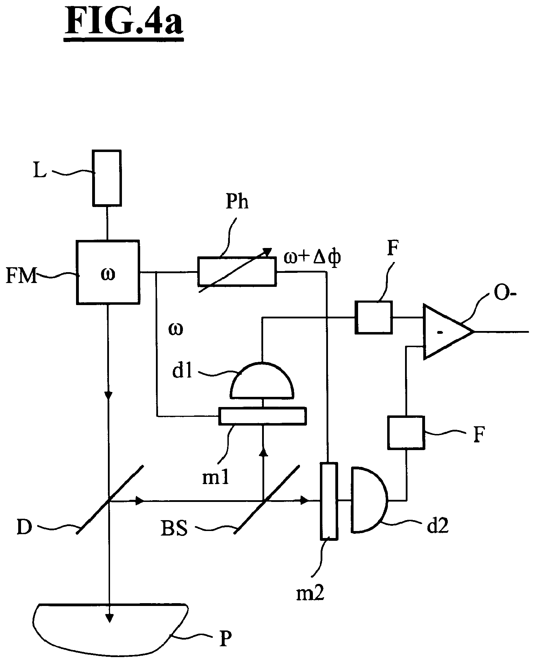

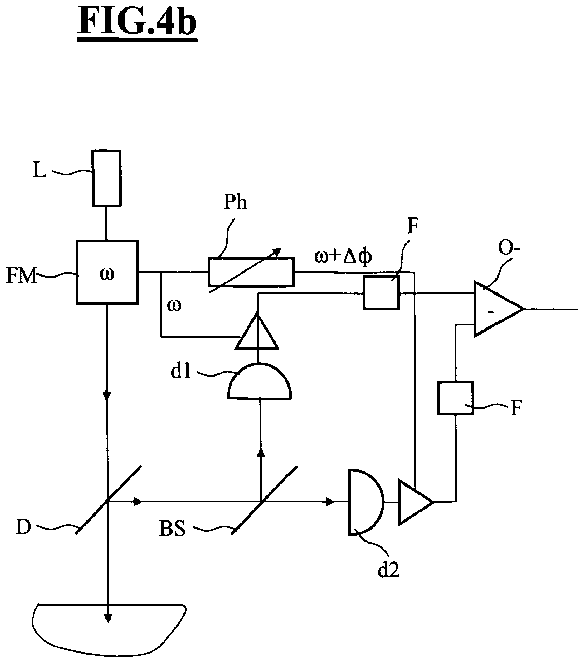

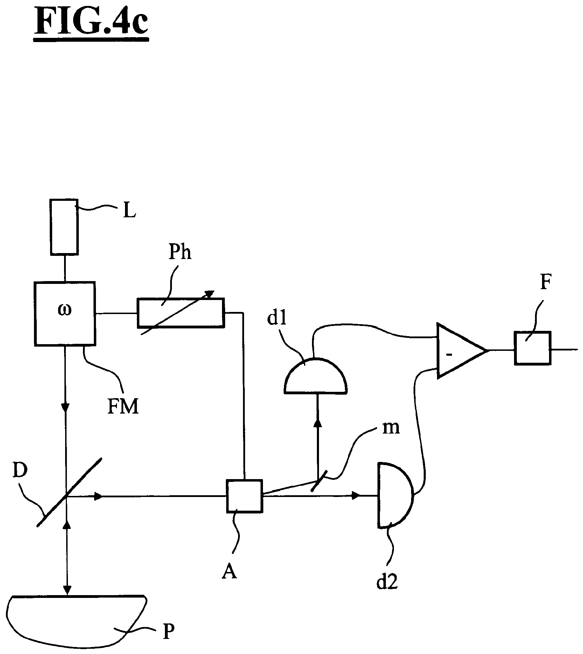

Der LI-Verstärker extrahiert somit das Signal bei der Frequenz $\omega_r = \omega_L$ und liefert selbst ein Ausgangssignal, welches linear von der Signalamplitude bei dieser Referenzfrequenz abhängt.
Im Weiteren werden anhand Fig. 4 a) und b) Anordnungen zur FMM Modulation in Ganzen dargestellt und beschrieben, die auch zum Stand der Technik (lock in Verfahren) alternative Anordnungen zur demodulierenden Detektion enthalten und mit den o.g. Erfindungen vorteilhaft zusammen eingesetzt werden können.
Erfindungsgemäß werden optische Modulatoren zur Demodulation in der Detektion eingesetzt
oder die Betriebsweise der Detektoren zur Demodulation genutzt.
Abbildung 4a) zeigt einen Mikroskopaufbau zur Erhöhung der Eindringtiefe/Streulichtunterdrückung wobei in einem schematischen Strahlengang von einem Laser L in Richtung einer Probe P ein dichroitischer Teilerspiegel D zur Trennung von Beleuchtungs- und Detektionsstrahlengang vorgesehen.
Die Detektion wird über einen Strahlteiler BS in zwei Teilstrahlengänge aufgespalten, in denen sich Detektoren d1, d2 befinden:
Weiterhin dargestellt sind optische Modulatoren m1, m2, ein Element Ph zur Phaseneinstellung, ein Filter F, ein Fokus-Modulator FM sowie ein Subtraktionsoperator O-.
Der Laser L zur Fluoreszenzanregung wird mit einem Fokus-Modulator (FM) wie beispielsweise anhand Fig. 1 und 2 beschrieben mit der Frequenz ω moduliert.
Die über den Dichroiten (D) reflektierte, nun ebenfalls mit ω modulierte FluoreszenzStrahlung der Probe (P) wird über einen 50/50 Strahlteiler (BS) von zwei Detektoren d1 und d2 phasensensitiv detektiert. Dazu wird beispielsweise vor d1 und d2 jeweils noch ein Modulator m eingesetzt (m1, m2 in 3a) oder der Detektor-gain von d1 und d2 wird moduliert (3b). Die geglätteten Signale (Filter F, z.B. Integrator) werden dann voneinander subtrahiert (Operator O-).
Die Modulatoren M1, m2 können vorteilhaft optische Modulatoren wie EOM sein m1 wird direkt moduliert und m2 erfährt eine Phasenverschiebung über Ph, dadurch werden zwei Teilsignale detektiert die zueinander eine Phasendifferenz aufweisen (Delta Phi) und gemischt und mit Tiefpassfilter gefiltert, es erfolgt also vorteilhaft eine optische Demodulation mit eingestellter Relativphase, im Idealfall von 90 Grad zwischen den beiden Detektionskomponenten, um die Zustände mit intaktem Fokus und die verschobenen Zustände in denen der Fokus durch die destruktive Interferenz gestört ist, voneinander subtrahieren zu können (- Operator),
so wird auf jedem Pixel vom Signal aus dem Fokus der außerfokale Hintergrund (Streulicht) abgezogen.
In Fig. 4b wird nicht das optische Signal moduliert sondern der "gain" der Detektoren (z.B. Beschleunigungsspannung eines PMT), jeweils über FM angesteuert und wieder über Ph die Phase eingestellt, die Signale mit F gefiltert und mit O- subtrahiert.

Die Detektoren d1, d2 werden beispielsweise mit Frequenz ω (und eingestellter Phasenverschiebung) ein- und ausgeschaltet.

Optische Modulation im Detektionsstrahlengang:
Erfindungsgemäß wird mittels AOM eine Strahlumschaltung zur Demodulation genutzt.

Abbildung 4c) zeigt einen Strahlengang ähnlich wie in Fig. 3 dargestellt.

Hier wird zwischen jedoch zwischen den Detektoren d1 und d2 mit der Frequenz ω umgeschaltet, vorteilhaft mittels eines AOD (A), ähnlich wie in Fig.2 dargestellt, jedoch hier in der Detektion.

Wiederum und wie schon dargestellt und erläutert erfolgt eine Subtraktion der in-Fokus und ausser-Fokus Signale und Tiefpass-Filtern.

Dadurch dass kein Strahlteiler verwendet wird geht nicht jeweils die Hälfte der Signalintensität verloren.

Über Ph kann der Phasenunterschied eingestellt werden.

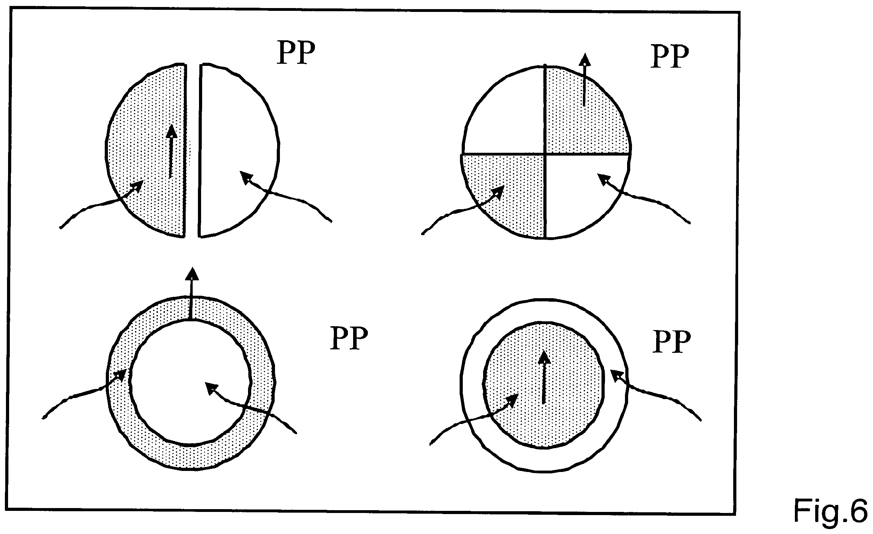

In Fig. 6-8 sind weitere vorteilhafte Ausführungen ergänzend dargestellt.

Die erste Ergänzung betrifft die Struktur der Phasenplatte selbst. Diese wurde ursprünglich so beschrieben, dass sie aus einer Kombination einer lambda/2-Platte und einer isotrop wirkenden Platte besteht. Allerdings sind allgemeiner auch weitere Kombinationen denkbar.

Zum Beispiel kann dies erreicht werden, wenn die Platte PP wie in Fig. 6 aus Bereichen zusammengesetzt sein, die die Wirkung einer lambda-Platte (und damit die Phase entsprechend um lambda und nicht lambda/2 schieben) haben und Bereichen, in denen eine lambda/2-Phasenschiebung erreicht wird. Im Allgemeinen kann jeder beliebige Phasenhub in verschiedenen Teilbereichen der Phasenplatte realisiert werden, wenn man den Differenzbetrag auf den vorteilhaften Wert von lambda/2 einstellt.

Die in Fig. 1 dargestellten unterschiedlichen Ausführungen einer Kombination von unterschiedlichen Bereichen kann wie in Fig. 6 dargestellt, auch für unterschiedliche Bereiche, die beispielsweise eine Phasenverzögerung von lambda oder lambda / halbe wie dargestellt aufweisen.

Besonders vorteilhaft ist es zudem, den Phasenhub der beiden Teilbereiche gegeneinander zu achromatisieren.

Dies kann durch sogenannte "achromatische Wellenplatten" oder "achromatische Verzögerungsplatten" realisiert werden, die beispielsweise aus unterschiedlichen doppelbrechenden Kristallen bestehen und für einen breitbandigen Wellenlängenbereich dieselben optischen Eigenschaften (dieselbe Phasenverzögerung) aufweisen und wobei dann der Phasenverlauf der isotropen Teilplatte darauf angepasst wird, indem bspw. Platten, die aus mindestens zwei Gläsern bestehen, verwendet werden.

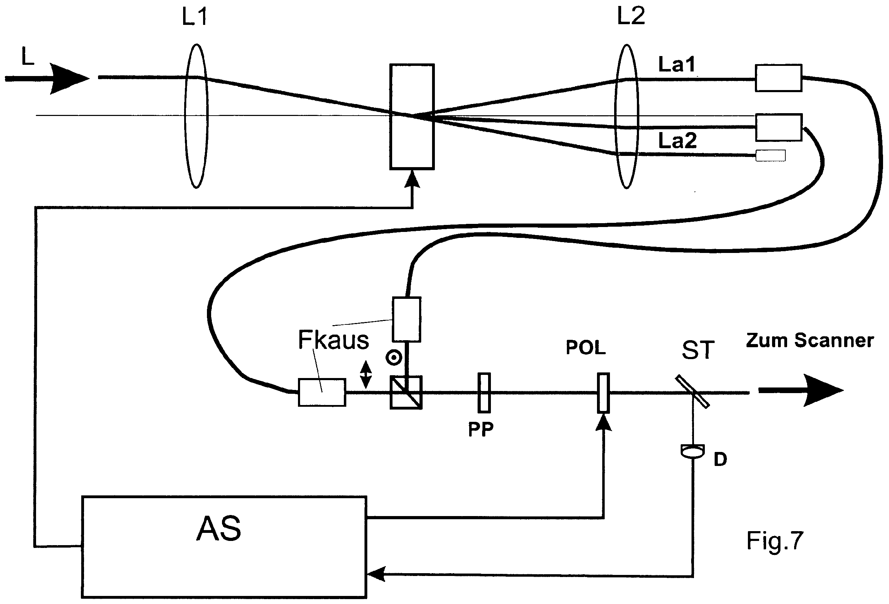

Bezüglich der Beleuchtung der Phasenplatte wurde vorausgesetzt, dass die Polarisationsrichtung der Beleuchtung sehr schnell schaltbar ist. Hierfür wurde weiter oben zum Beispiel ein EOM vorgeschlagen, mit welchem eben diese schnelle Drehung der Polarisationsrichtung ermöglicht würde. Die Lichtzuführung zur Phasenplatte wurde dabei so beschrieben, dass eine Lichtzuführung durch eine optische Faser erfolgen kann, wobei die Polarisation erhalten bleiben muss. Weiterhin ist ist jedoch erkannt worden, dass eine weitere und in verschiedener Hinsicht vorteilhaftere Lösung erreicht werden kann, wenn man das polarisierte Licht über zwei Fasern der Phasenplatte zuführt. Hierbei wird, wie in Fig.7 gezeigt, das Licht mit einer definierten Polarisation in zwei polarisationserhaltende Fasern eingekoppelt, wobei zwischen den beiden Eingängen der Fasern mit der Frequenz F geschaltet werden kann. Der Ausgang einer der Fasern wird dann an der Auskoppelstelle so gegenüber dem Ausgang der zweiten Faser eingestellt, dass die Polarisationsrichtungen senkrecht zueinander stehen. Das erlaubt die Zusammenführung beider Polarisationsrichtungen in einem polarisierenden Strahlteilerwürfel (PBS), bzw. einer anderen geeigneten Art der optischen Zusammenführung wie z.B. optische Faserkoppler, sodass die an einem Ausgang des PBS eine mit der Frequenz F variierende Polarisation emittiert wird. Die Schaltung zwischen den Fasereingängen kann zum Beispiel mit einem Acoustooptischen Modulator (oder auch akousto-optischen Scanner) wie in Fig. 7 dargestellt erfolgen. Dabei wird die Schallwelle in dem Kristall zwischen den beiden Werten $f_{ac}^1$ und $f_{ac}^2$ mit der Frequenz F geschaltet. Die akustischen Frequenzen $f_{ac}^1$ und $f_{ac}^2$ erzeugen dabei je einen verschiedenen Ablenkungswinkel des Lichtstrahls in La1 und La2. Diese räumliche Aufspaltung wird genutzt, um in die jeweiligen optischen Fasern einzukoppeln. Die elektronische Generierung der beiden Frequenzen kann beispielsweise mit einem DDS (Direct digital synthesizer) oder anderen geeigneten Frequenzschaltern erfolgen. Eine weitere und insbesondere vorteilhafte Lösung ergibt sich dadurch, dass die Frequenzen $f_{ac}^1$ und $f_{ac}^2$ permanent am akusto-optischen Kristall anliegen und die Amplituden der beiden Komponenten zeitlich moduliert werden. Für das Verfahren macht man das sinnvollerweise so, dass die Summenintensität zeitlich konstant bleibt. Eine technische Realisierung kann zum Beispiel mittels eines DDS (direct digital synthesizer) erfolgen.

Die Vorteile der dargestellten Ausführung ergeben sich daraus, dass

1) zur Schaltung ein akusto-optisches Element dient, welches kleiner ist und in der Handhabung in einem Mikroskop deutliche Vorteile aufweist
2) die Fasern direkt für die Lichtzuführung vom Lasermodul zum Scankopf eines LSM genutzt werden können.

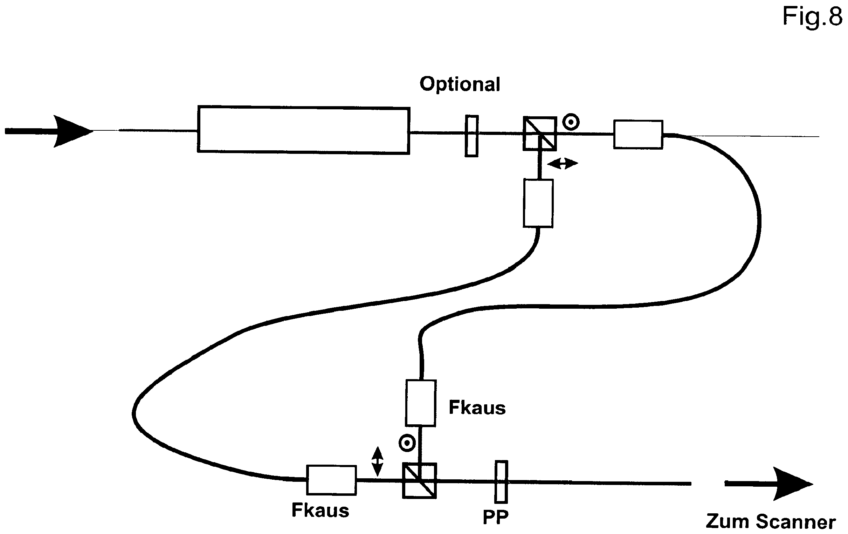

Ebenso ist denkbar, dass man mit einem EOM in Kombination mit einem PBS eine schnell schaltende Faserkopplung realisiert. Hierbei befindet sich hinter dem EOM ein PBS, welcher das Licht direkt in beide Fasern in Abhängigkeit des Polarisationszustandes verteilt (Fig.8).

Es kann weiterhin von Vorteil sein, wenn die Polarisation nach dem PBS einen vorgegebenen Wert hat. Hierzu kann nach der Phasenplatte ein drehbarer oder in anderer Weise bezüglich seiner Polarisationsbeeinflussung einstellbarer Polarisator eingebracht werden.

Mit diesem kann auch ein Intensitätsabgleich zwischen den beiden Teilstrahlen nach den Lichtleitfasern erfolgen.

Die diesbezügliche Messung kann im Mikroskop oder mit einer externen Monitordiode durchgeführt werden.

Für einen genaueren Abgleich zwischen den Teilstrahlen und der Einstellung des AOM/ EOM und des einstellbaren Polarisators Pol kann ein Teil des Strahls nach dem PBS auf eine Diode D ausgekoppelt werden.

Die Intensitätsschwankungen, die mit der Diode gemessen werden, werden unter anderem als Steuergröße genutzt, um die maximalen Amplituden der Frequenzen $f_{ac}1$ und $f_{ac}2$ einzustellen.

Bislang wurde von jeweils zwei Fasern und Frequenzen ausgegangen. Dies ist im Sinne eines Beispiels zu verstehen. Das Verfahren kann allerdings im allgemeinen Fall auf die Schaltung von N Lichtzuständen mit zum Beispiel N Fasern genutzt werden.

Im Weiteren werden die Abbildungen im Detail beschrieben.

Fig. 7 beschreibt das schnelle Schalten der Polarisation mittels eines AOD in Kombination mit einer Faseroptik F1, F2 zur Erzeugung des Phasenschaltens mittels einer geeigneten Phasenplatte PP. Ausführungsbeispiele zum Abgleich der Intensitäten beider Schaltzustände sind gezeigt.

Das Licht der Laserlichtwelle L wird über eine Linse L1 in die Ebene eines AOD (Akustooptischer Ablenker) eingestrahlt dessen Schallwelle im Kristall mit einer Frequenz F zwischen verschiedenen akustischen Frequenzen F1 und F2 umgeschaltet wird, die alternierend unterschiedliche Ablenkwinkel des Laserstrahl erzeugen.

Die alternierend abgelenkten Laserstrahlen La1, La2 werden jeweils über Faser-Einkoppler FKein in Lichtleiter F1, F2 eingeleitet und mittels Faserauskopplern FKaus aus an unterschiedlichen Positionen an einem Polteiler PBS ausgekoppelt.

Die Fasern F1 und F2 werden hierbei so eingerichtet dass ihre (vorzugsweise lineare) Polarisation am PBS seitlich und von oben zueinander senkrecht steht.

Das wird durch entsprechendes Verdrehen der Faserenden bzw. der Auskoppeleinheiten bewirkt, wobei hinter dem PBS jeweils für F1 und F2 anhand der Signalausbeute die optimale Stellung am PBS eingestellt werden kann.

Nach dem PBS ist die Phasenplatte PP wie in Fig. 6 beschrieben angeordnet und erzeugt durch den Phasensprung zwischen ihren Hälften das FMM Signal zur Weiterleitung in das Mikroskop und zur Scaneinrichtung.

Über einen Strahlteiler ST kann eine Monitordiode D ausgekoppelt werden, die über eine Ansteuereinheit AS zur Einstellung der Signalintensitäten und des Verhältnisses der beiden Polkomponenten dient.

Dabei ist zwischen PP und ST vorteilhaft ein drehbarer Polarisator vorgesehen, der zur Feinabstimmung des Verhältnisses der beiden Polkomponenten und zum Ausgleich möglicher Fehler bei der Orientierung der Fasern F1, F2 zueinander wie oben erwähnt, dienen kann.

Über AS kann die Detektion über die Monitordiode an die Frequenz der Umschaltung durch den AOD synchronisiert sein, so dass sich die einzelnen Intensitätskomponenten voneinander trennen lassen.

Fig. 8 beschreibt eine weitere Ausführung mit einem EOM zur Umschaltung der Polarisation und damit der Phase nach der Phasenplatte in Verbindung mit den Komponenten, wie oben anhand Fig. 7 dargestellt, in analoger Wirkungsweise wie in Fig7. Hier erfolgt allerdings die Trennung in die einzelnen Polarisationskomponenten durch einen Polteiler PBS1 hinter dem EOM, wobei nach dem PBS die unterschiedlichen Polkomponenten wiederum in getrennte Fasern F1, F2 eingekoppelt werden, die am PBS 2 wiederum durch Orientierung der Fasern bzw. der Auskopplungen FK mit zueinander senkrechten Polarisationen eingestrahlt werden.

Mögliche Schutzgegenstände:

1. Mikroskop mit mindestens einem Beleuchtungsstrahl, der in einem Teilbereich entlang seines Querschnitts mit einer Modulationsfrequenz phasenmoduliert wird und einem Mikroskopobjektiv zur Fokussierung des Beleuchtungsstrahls in eine Probe sowie einem Detektionsstrahlengang und mindestens einem Mittel zur Demodulation, wobei mindestens ein polarisationsänderndes Element im Beleuchtungsstrahlengang vorgesehen ist, dem eine Phasenplatte nachgeordnet ist, die mindestens zwei Bereiche mit unterschiedlicher Phasenbeeinflussung aufweist.

2. Mikroskop nach Gegenstand 1, wobei das polarisationsändernde Element ein polarisationsdrehendes Element ist

3. Mikroskop nach Gegenstand 2, wobei das polarisationsdrehende Element ein elektrooptischer Modulator (EOM) ist.

4. Mikroskop nach einem der vorangehenden Gegenstände, wobei die Phasenplatte einen Bereich oder Bereiche mit im Wesentlichen nicht beeinflusster Phase und einen Bereich oder Bereiche mit beeinflusster Phase aufweist.

5. Mikroskop nach Gegenstand 4, wobei der Bereich oder die Bereiche mit beeinflusster Phase mindestens eine lambda / halbe Platte ist.

6. Mikroskop nach einem der vorangehenden Gegenstände, wobei zur Demodulation elektronische Mittel wie eine lock-in Verstärkung vorgesehen sind.

7. Mikroskop nach einem der vorangehenden Gegenstände, wobei zur Demodulation ein AOM oder EOM vorgesehen ist oder
mittels mindestens eines akustooptischen Modulators (AOM) eine Strahlumschaltung zur Demodulation erfolgt, oder eine Änderung der Betriebsweise der Detektoren zur Demodulation erfolgt.

8. Mikroskop nach einem der vorangehenden Gegenstände, wobei zwischen dem polarisationsändernden Element und der Phasenplatte eine Lichtleitfaser angeordnet ist.

9. Mikroskop nach einem der vorangehenden Gegenstände, wobei die Phasenplatte zur Polarisationsänderung selbst drehbar ausgebildet ist.

10. Mikroskop nach einem der vorangehenden Gegenstände, wobei die Phasenplatte ein räumlicher Lichtmodulator (SLM, Spatial Light Modulator) ist.

11. Verfahren zur mikroskopischen Erfassung von Licht einer Probe, insbesondere zum Betrieb eines Mikroskops nach einem der Gegenstände 1-10, die mit mindestens einem Beleuchtungsstrahl über ein Mikroskopobjektiv zur Fokussierung beleuchtet wird, der in einem Teilbereich entlang seines Querschnitts phasenmoduliert ist, wobei in einem Detektionsstrahlengang eine Demodulation erfolgt, wobei vorzugsweise die Phasenmodulierung der Beleuchtung in der Probe in eine Intensitätsmodulation im Detektionsstrahlengang umgewandelt wird, die demoduliert wird
wobei mittels mindestens eines polarisationsändernden Elementes, vorzugsweise eines polarisationsdrehenden Elementes eine Polarisationsänderung erfolgt und mittels einer Phasenplatte die mindestens zwei Bereiche mit unterschiedlicher Phasenbeeinflussung aufweist, die Phasenmodulation erzeugt wird.

12. Verfahren nach Gegenstand 11, wobei als polarisationsdrehendes Element ein elektrooptischer Modulator (EOM) eingesetzt wird.

13. Verfahren nach einem der vorangehenden Gegenstände, wobei über eine Messung des Probensignals bei einem Wechsel zwischen unterschiedlichen Phasenplatten oder einer eingestellten Veränderung eines Phasenmodulators wie eines SLM eine Regelung erfolgt, die der Optimierung des Messergebnisses dient.

14. Mikroskop mit mindestens einem Beleuchtungsstrahl, und einem Mikroskopobjektiv zur Fokussierung des Beleuchtungsstrahls in eine Probe sowie einem Detektionsstrahlengang mit mindestens einem Demodulator, wobei der Beleuchtungsstrahl abwechselnd auf mindestens zwei Strahlengänge aufgeteilt wird
und in einem der Strahlengänge ein Element zur Erzeugung eines zum ersten Strahlengang unterschiedlichen Feldmodes vorgesehen ist und die beiden Strahlengänge mit unterschiedlichen Feldmoden im Fokus überlagert sind.

15. Mikroskop nach Gegenstand 14, wobei eine Schaltung der Strahlengänge durch einen durch einen Polarisationsschalter erfolgt.

16. Mikroskop nach Gegenstand 15, wobei der Polarisationsschalter aus mindestens einem elektrooptischen Modulator und mindestens einem Polteiler besteht.

17. Mikroskop nach einem der Gegenstände 14-16, wobei ein vom Gaußmode abweichender Mode, insbesondere ein Donut-Mode, erzeugt wird.

18. Mikroskop nach Gegenstand 14, wobei die Strahlengänge als zwei Ordnungen nach Durchgang des Beleuchtungsstrahls durch einen AOM oder AOTF erzeugt werden.

19. Mikroskop nach Gegenstand 18, wobei die Strahlengänge alternierend erzeugt werden und über Reflektoren durch den AOM oder AOTF in dieselbe Strahlrichtung zurückgelenkt werden.

20. Mikroskop nach einem der Gegenstände 14-19, wobei zur Erzeugung des unterschiedlichen Feldmodes eine Spiralphasenmaske oder ein diffraktiv optisches Element oder ein räumlicher Lichtmodulator (SLM) eingesetzt sind.

21. Mikroskop nach einem der Gegenstände 14-20 wobei mehrere Lichtstrahlen, vorgesehen sind die jeweils auf die Strahlengänge aufgeteilt sind und vorzugsweise mehrere Elemente zur Erzeugung eines unterschiedlichen Feldmodes in einem der Strahlengänge vorgesehen sind.

22. Mikroskopieverfahren, insbesondere nach einem der Gegenstände 14-21, wobei eine Probe mit mindestens einem Beleuchtungsstrahl über ein Mikroskopobjektiv zur Fokussierung beleuchtet wird und in einem Detektionsstrahlengang mindestens eine Demodulation erfolgt,
wobei der Beleuchtungsstrahl abwechselnd auf mindestens zwei Strahlengänge aufgeteilt wird und in einem der Strahlengänge ein zum anderen Strahlengang unterschiedlicher Feldmode erzeugt wird und die beiden Strahlengänge mit unterschiedlichen Feldmoden im Fokus überlagert werden.

23. Laser- Scanning- Mikroskop und/oder Betriebsverfahren eines Laser- Scanning-Mikroskops nach mindestens einem der vorangehenden Gegenstände

24. Mikroskop oder Mikroskopieverfahren nach einem der vorangehenden Gegenstände, wobei die Phasenplatte unterschiedliche Bereiche, insbesondere Bereiche mit unterschiedlicher Phasenverzögerung aufweist die zueinander einen Phasensprung von lamda / halbe aufweisen.

25. Mikroskop oder Mikroskopieverfahren nach einem der vorangehenden Gegenstände, wobei ein akustooptischer Ablenker (Deflektor) vorgesehen ist, der das Beleuchtungslicht abwechselnd oder simultan, vorzugsweise mit modulierter Amplitude auf die Eingänge mindestens zweier Lichtleitfasern lenkt.

26. Mikroskop oder Mikroskopieverfahren nach einem der vorangehenden Gegenstände, wobei nach dem polarisationsändernden Element Einkoppelmittel zur Einkopplung in mindestens zwei Lichtleitfasern vorgesehen sind.

27. Mikroskop oder Mikroskopieverfahren nach einem der vorangehenden Gegenstände, wobei im Wechsel in die Lichtleitfasern eingekoppelt wird oder durch eine Amplitudenmodulation eine zeitabhängige Wichtung von mindestens zwei Lichtkomponenten erzeugt wird.

28. Mikroskop oder Mikroskopieverfahren nach einem der vorangehenden Gegenstände, wobei in die Lichtleitfasern eine Einkopplung jeweils unterschiedlicher Polarisationsorientierung erfolgt.

29. Mikroskop oder Mikroskopieverfahren nach einem der vorangehenden Gegenstände, wobei die Enden der Lichtleitfasern oder ihre
Auskopplungen an einem Polteiler zueinander so orientiert sind, dass zwei unterschiedlich polarisierte Strahlungsanteile vorliegen.

30. Mikroskop oder Mikroskopieverfahren nach einem der vorangehenden Gegenstände, wobei die unterschiedlich orientierten Polarisationsanteile über die Phasenplatte in Richtung der Probe gelangen (die Phasenplatte den Lichtleitfasern nachgeordnet ist).

31. Mikroskop oder Mikroskopieverfahren nach einem der vorangehenden Gegenstände, wobei nach der Phasenplatte ein verstellbarer Polarisator angeordnet ist.

32. Mikroskop oder Mikroskopieverfahren nach einem der vorangehenden Gegenstände, wobei nach der Phasenplatte ein Teil der Strahlung auf einen Referenzdetektor zur Steuerung der Polarisationsverteilung und/ oder des AOD oder EOM ausgeblendet wird.

**Patentansprüche**

1. Mikroskop, insbesondere Laser-Scanning-Mikroskop, mit mindestens einem Beleuchtungsstrahl, und einem Mikroskopobjektiv zur Fokussierung des Beleuchtungsstrahls in eine Probe sowie einem Detektionsstrahlengang mit mindestens einem Demodulator,
wobei der Beleuchtungsstrahl abwechselnd auf mindestens zwei Strahlengänge aufgeteilt wird
und in einem der Strahlengänge ein Element zur Erzeugung eines zum ersten Strahlengang unterschiedlichen Feldmodes vorgesehen ist und die beiden Strahlengänge mit unterschiedlichen Feldmoden im Fokus überlagert sind.

2. Mikroskop nach Anspruch 1, wobei eine Schaltung der Strahlengänge durch einen durch einen Polarisationsschalter erfolgt.

3. Mikroskop nach Anspruch 2, wobei der Polarisationsschalter aus mindestens einem elektrooptischen Modulator und mindestens einem Polteiler besteht.

4. Mikroskop nach einem der Ansprüche 1 bis 3, wobei ein vom Gaußmode abweichender Mode, insbesondere ein Donut-Mode, erzeugt wird.

5. Mikroskop nach Anspruch 1, wobei die Strahlengänge als zwei Ordnungen nach Durchgang des Beleuchtungsstrahls durch einen AOM oder AOTF erzeugt werden.

6. Mikroskop nach Anspruch 5, wobei die Strahlengänge alternierend erzeugt werden und über Reflektoren durch den AOM oder AOTF in dieselbe Strahlrichtung zurückgelenkt werden.

7. Mikroskop nach einem der Ansprüche 1 bis 6, wobei zur Erzeugung des unterschiedlichen Feldmodes eine Spiralphasenmaske oder ein diffraktiv optisches Element oder ein räumlicher Lichtmodulator (SLM) eingesetzt sind.

8. Mikroskop nach einem der Ansprüche 1 bis 7, wobei mehrere Lichtstrahlen vorgesehen sind, die jeweils auf die Strahlengänge aufgeteilt sind und vorzugsweise mehrere Elemente zur Erzeugung eines unterschiedlichen Feldmodes in einem der Strahlengänge vorgesehen sind.

9. Mikroskopieverfahren, insbesondere für ein Laser-Scanning-Mikroskop, wobei eine Probe mit mindestens einem Beleuchtungsstrahl über ein Mikroskopobjektiv zur Fokussierung beleuchtet wird und in einem Detektionsstrahlengang mindestens eine Demodulation erfolgt,
wobei der Beleuchtungsstrahl abwechselnd auf mindestens zwei Strahlengänge aufgeteilt wird und in einem der Strahlengänge ein zum anderen Strahlengang unterschiedlicher Feldmode erzeugt wird und die beiden Strahlengänge mit unterschiedlichen Feldmoden im Fokus überlagert werden.

10. Mikroskop oder Mikroskopieverfahren nach einem der vorangehenden Ansprüche, wobei

- die Phasenplatte unterschiedliche Bereiche, insbesondere Bereiche mit unterschiedlicher Phasenverzögerung aufweist, die zueinander einen Phasensprung von lamda / halbe aufweisen
und/oder
- ein akustooptischer Ablenker (Deflektor) vorgesehen ist, der das Beleuchtungslicht abwechselnd oder simultan, vorzugsweise mit modulierter Amplitude auf die Eingänge mindestens zweier Lichtleitfasern lenkt
und/oder
- nach dem polarisationsändernden Element Einkoppelmittel zur Einkopplung in mindestens zwei Lichtleitfasern vorgesehen sind
und/oder
- im Wechsel in die Lichtleitfasern eingekoppelt wird oder durch eine Amplitudenmodulation eine zeitabhängige Wichtung von mindestens zwei Lichtkomponenten erzeugt wird
und/oder
- in die Lichtleitfasern eine Einkopplung jeweils unterschiedlicher Polarisationsorientierung erfolgt
und/oder
- die Enden der Lichtleitfasern oder ihre

Auskopplungen an einem Polteiler zueinander so orientiert sind, dass zwei unterschiedlich polarisierte Strahlungsanteile vorliegen.

11. Mikroskop oder Mikroskopieverfahren nach einem der vorangehenden Ansprüche, wobei die unterschiedlich orientierten Polarisationsanteile über die Phasenplatte in Richtung der Probe gelangen (die Phasenplatte den Lichtleitfasern nachgeordnet ist).

**12.** Mikroskop oder Mikroskopieverfahren nach einem der vorangehenden Ansprüche, wobei nach der Phasenplatte ein verstellbarer Polarisator angeordnet ist.

**13.** Mikroskop oder Mikroskopieverfahren nach einem der vorangehenden Ansprüche, wobei nach der Phasenplatte ein Teil der Strahlung auf einen Referenzdetektor zur Steuerung der Polarisationsverteilung und/oder des AOD oder EOM ausgeblendet wird.

# FIG.1a

# FIG.1b

# FIG.1c

Schnelle oder langsame Achse

EOM

Phasenplatte P

L

M

F

λ/2    Glas

λ/2    Glas

λ/2    Glas

λ/2    Glas

# FIG.2a

# FIG.2b

# FIG.2c

M1

M2

SPP array

EOM

M

L1-4

PBS

M4

M2

# FIG.3

# FIG.4a

# FIG.4b

# FIG.4c

## FIG.5a

## FIG.5a

Fig.6

Fig.7

Fig.8

Optional

Fkaus

Fkaus

PP

Zum Scanner

EP 3 422 088 A1

**Europäisches Patentamt**
**European Patent Office**
**Office européen des brevets**

# EUROPÄISCHER RECHERCHENBERICHT

Nummer der Anmeldung

EP 17 20 2895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHAU POH CHONG ET AL: "High-speed focal modulation microscopy using acousto-optical modulators", BIOMEDICAL OPTICS EXPRESS, Bd. 1, Nr. 3, 30. September 2010 (2010-09-30), Seite 1026, XP055526079, United States ISSN: 2156-7085, DOI: 10.1364/BOE.1.001026 * das ganze Dokument * ----- | 1,4,6-9 | INV. G02F1/01 G02F1/11 G02B21/00 G02B26/06 |
| X,D | N. G. CHEN ET AL: "Real-time focal modulation microscopy", PROCEEDINGS OF SPIE, Bd. 7570, 25. Januar 2010 (2010-01-25), Seiten 75700Q-75700Q-6, XP055000327, ISSN: 0277-786X, DOI: 10.1117/12.841511 * das ganze Dokument * ----- | 1,9 | |
| X,D | WO 2009/008838 A1 (UNIV SINGAPORE [SG]; CHEN NANGUANG [SG]; SHEPPARD COLIN [SG]; WONG CHE) 15. Januar 2009 (2009-01-15) * Zusammenfassung * * Abbildungen 1-5 * * Seite 7 - Seite 9 * ----- | 1,9 | RECHERCHIERTE SACHGEBIETE (IPC) G02B |
| A | US 2002/154317 A1 (KEMPE MICHAEL [DE]) 24. Oktober 2002 (2002-10-24) * Zusammenfassung * ----- | 1-13 | |
| A | EP 1 617 268 A2 (ZEISS CARL JENA GMBH [DE]) 18. Januar 2006 (2006-01-18) * Zusammenfassung; Abbildungen * ----- | 1-13 | |
| E | WO 2011/116901 A2 (ZEISS CARL MICROIMAGING GMBH [DE]; KALKBRENNER THOMAS [DE]; WOLLESCHEN) 29. September 2011 (2011-09-29) * Zusammenfassung; Abbildungen * ----- | 1,9 | |

Der vorliegende Recherchenbericht wurde für alle Patentansprüche erstellt

| Recherchenort | Abschlußdatum der Recherche | Prüfer |
|---|---|---|
| München | 22. November 2018 | Windecker, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 3 422 088 A1**

## ANHANG ZUM EUROPÄISCHEN RECHERCHENBERICHT
## ÜBER DIE EUROPÄISCHE PATENTANMELDUNG NR.

EP 17 20 2895

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2018

| Im Recherchenbericht angeführtes Patentdokument | Datum der Veröffentlichung | Mitglied(er) der Patentfamilie | Datum der Veröffentlichung |
|---|---|---|---|
| WO 2009008838 A1 | 15-01-2009 | CN 101802675 A<br>EP 2171516 A1<br>JP 5551069 B2<br>JP 2010532878 A<br>KR 20100045964 A<br>US 2010214404 A1<br>WO 2009008838 A1 | 11-08-2010<br>07-04-2010<br>16-07-2014<br>14-10-2010<br>04-05-2010<br>26-08-2010<br>15-01-2009 |
| US 2002154317 A1 | 24-10-2002 | AU 4099799 A<br>EP 1082579 A1<br>JP 2002517011 A<br>US 6151127 A<br>US 6381023 B1<br>US 2002154317 A1<br>WO 9961865 A1 | 13-12-1999<br>14-03-2001<br>11-06-2002<br>21-11-2000<br>30-04-2002<br>24-10-2002<br>02-12-1999 |
| EP 1617268 A2 | 18-01-2006 | DE 102004034987 A1<br>EP 1617268 A2<br>EP 1944642 A2<br>JP 2006031018 A<br>US 2006012864 A1<br>US 2008285123 A1 | 02-02-2006<br>18-01-2006<br>16-07-2008<br>02-02-2006<br>19-01-2006<br>20-11-2008 |
| WO 2011116901 A2 | 29-09-2011 | DE 102010013829 A1<br>EP 2553512 A2<br>JP 2013524260 A<br>US 2013020473 A1<br>WO 2011116901 A2 | 29-09-2011<br>06-02-2013<br>17-06-2013<br>24-01-2013<br>29-09-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009008838 A
- EP 500717 B2

- DE 19904592

**In der Beschreibung aufgeführte Nicht-Patentliteratur**

- **CHEN et al.** *Opt. Express,* 2008, vol. 16, 18764
- **WONG et al.** *Appl. Opt.,* 2009, vol. 48, 3237
- **SUEDA et al.** *Opt. Express,* 2004, vol. 12, 3548

- **A. LERAY ; J. MERTZ.** *Opt. Express,* 2006, vol. 14, 10565
- *New J. Phys.,* 2004, vol. 6, 71
- **JONATHAN LEACH ; ERIC YAO ; MILES J PADGETT.** *Observation of the vortex structure of a non-integer vortex beam*